# EUROPEAN PATENT APPLICATION

(11) **EP 2 512 088 A1**
(43) Date of publication of application: **17.10.2012**
(21) Application number: 10843734.4
(22) Date of filing: 19.10.2010
(51) Int. Cl.: H04L 29/06

(54) **METHOD AND SYSTEM FOR ACCESSING NETWORK ON PUBLIC DEVICE**

(30) Priority: 20.01.2010 CN 201010002852
(71) Applicant: ZTE Corporation, Shenzhen, Guangdong 518057 (CN)
(72) Inventor: YAN, Zhengqing, Shenzhen Guangdong 518057 (CN); ZHANG, Shiwei, Shenzhen Guangdong 518057 (CN); FU, Tao, Shenzhen Guangdong 518057 (CN)
(74) Representative: Thul, Stephan
(86) International application number: PCT/CN2010/077854
(87) International publication number: WO 2011/088694

(57) **Abstract**

A method and system for accessing a network over a public device are provided in the present invention. The method includes: after receiving a network access request message transmitted by a user over a public device, an Access Service Node (ASN) transmitting the received network access request message to an Authentication Center (AC), wherein, the network access request message comprises identifier information of the user; the AC initiating inquiring to an Identity Information Center (IIC) according to the identifier information of the user, and authenticating the legal validity of the user according to an inquired result, and if the authentication passes, transmitting the user's Access Identifier (AID) to the ASN; and after receiving the user's AID, the ASN sending the received AID to the public device, and the public device using the user's AID as a virtual AID, and using the virtual AID to transmit/receive packets of the user. The present invention can perform effectively tracking and tracing on the user accessing the network over the public device.

## Description

### Technical Field

The present invention relates to the mobile communication field and the internet field, and in particular, to a method and system of accessing a network over a public device.

### Background of the Related Art

In the existing Internet Protocol (IP) networks, when accessing the network over a public network, the IP address of the public device is directly used to communicate with other users, and network regulatory agencies can not track and trace a user accessing the network over the public device. For example, in the existing networks, surfing the Internet needs to show the identity document. However, many Internet cafes still cannot identify the authenticity of the document, and even the Internet can be surfed using a certain common document provided by the Internet cafes without a legal document. This brings great difficulties to the tracking and tracing by the network regulatory agencies.

In addition, in the existing networks, due to the duality of Identity and location of the traditional IP addresses, the user can log in his/her own service account such as mail, Internet bank etc. over the public device, but cannot achieve binding between an IP of the User's network layer and a service of the application layer. Therefore, once the account is lost, a great loss will be brought to the user. If the binding between the IP of the user network layer and the service of the application layer is implemented over the traditional IP technologies, when accessing the network over the public device, the user cannot access his/her own service of the application layer due to the difference of the IP addresses of the network layer. While for the network regulatory agencies, since the account and the User's IP cannot be bound, the regulation on the user is also reduced.

In conclusion, the traditional IP technologies at present have the following problems:
1. Due to the duality of Identity and location of the traditional IP addresses, the regulatory agencies cannot effectively track and trace the user accessing the network over the public device, which not only has potential safety hazard, but also brings difficulties to the fight against illegal and criminal activities; and
2. In addition, the duality of Identity and location for the traditional IP addresses further makes the user not able to bind the IP of the network layer to the service of the application layer, thus not able to more effectively ensure the security of the service of the application layer.

### Summary of the Invention

The technical problem to be solved by the present invention is to provide a method and system for accessing a network over a public device, which can perform effective tracking and tracing on the user who accesses the network over the public device in a Subscriber Identifier and Locator Identifier Separation Network.

In order to solve the above problem, the present invention provides a method of accessing a network over a public device, applied to a Subscriber Identifier & Locator Separation Network, comprising:
after receiving a network access request message transmitted by a user over a public device, an Access Service Node (ASN) transmitting the received network access request message to an Authentication Center (AC), wherein, the network access request message comprises identifier information of the user;
the AC initiating an inquiry to an Identity Information Center (IIC) according to the identifier information of the user, and authenticating legality of the user according to an inquiry result, and if the authentication is passed, transmitting the user's Access Identifier (AID) to the ASN; and
after receiving the user's AID, the ASN sending the received AID to the public device, and the public device using the user's AID as a virtual AID, and using the virtual AID to transmit/receive messages of the user.

Preferably, the identifier information comprises at least a number of identification card or passport number of the user.

Preferably, the network access request message further comprises authentication information which is set when the IIC samples the identifier information of the user, and the authentication information comprises a password, an authentication code, or fingerprint information of the user.

Preferably, after receiving the inquiry request initiated by the AC, the IIC returns the authentication information of the user to the AC as an inquiry result; and
the AC authenticates the legality of the user according to the inquiry result, and if the authentication information in the network access request message is in accordance with the inquiry result, determines that the user passes the authentication, and if the authentication information in the network access request message is not in accordance with the inquiry result, determines that the user does not pass the authentication.

Preferably, in the step of the AC initiating an inquiry to an Identity Information Center (IIC) according to the identifier information of the user, and authenticating the legality of the user according to an inquiry result, and if the authentication passes, transmitting the user's Access Identifier (AID) to the ASN,
after receiving the inquiry request initiated by the AC, the IIC returns a validity period of the identification card of the user to the AC as the inquiry result; and
the AC authenticates the legality of the user according to the validity period of the identification card, and if the identification card is within the validity period, the user passes the authentication, and if the identification card is not within the validity period, the user does not pass the authentication.

Preferably, after receiving the user's AID, the ASN attaches the user's AID, establishes a mapping relationship between the user's AID and a Route Identifier (RID) of the ASN, and reports the mapping relationship to an Identification and Location Register (ILR) of the user.

Preferably, after receiving the user's AID, the ASN establishes a mapping table between the user's AID and the AID of the public device, and sets an attribute of the user's AID as a virtual AID; and
when receiving a message with the virtual AID being a source address or a destination address, the ASN inquires the mapping table to obtain the AID of the public device, and performs traffic statistic or charging on the public device.

Preferably, the ASN prohibits the managed public device from accessing a user or a device except for the AC.

The present invention further provides a system of accessing a network over a public device, applied to a Subscriber Identifier & Locator Separation Network, comprising: an Access Service Node (ASN), a public device and an Authentication Center (AC) and an Identity Information Center (IIC), wherein,
the ASN is configured to, after receiving a network access request message comprising identifier information of a user transmitted by the user over a public device, transmit the received network access request message to the AC, and after receiving the user's AID, send the received AID to the public device;
the AC is configured to, after receiving the network access request message, initiate an inquiry to the IIC according to the identifier information of the user in the network access request message, and authenticate legality of the user according to an inquiry result, and if the authentication is passed, transmit the user's Access Identifier (AID) to the ASN;
the public device is configured to after receiving the user's AID sent by the ASN, use the user's AID as a virtual AID, and use the virtual AID to transmit/receive messages of the user.

Preferably, the IIC is configured to after receiving the inquiry request initiated by the AC, return a validity period of the identification card of the user to the AC as an inquiry result;
the AC is configured to authenticate legality of the user according to the validity period of the identification card, and if the identification card is within the validity period, determine that the user passes the authentication, and if the identification card is not within the validity period, determine that the user does not pass the authentication.

Preferably, the network access request message further comprises authentication information,
the IIC is further configured to set the authentication information of the user while sampling the identifier information of the user; and after receiving the inquiry request of the user initiated by the AC, return the authentication information of the user to the AC as an inquiry result;
the AC is further configured to authenticate the legality of the user according to the inquiry result, and if the authentication information in the network access request message is in accordance with the inquiry result, determine that the user passes the authentication, and if the authentication information in the network access request message is not in accordance with the inquiry result, the user does not pass the authentication.

Preferably, the system further comprises an Identification and Location Register (ILR),
the ASN is further configured to attach the received user's AID which is transmitted by the AC, establish a mapping relationship between the user's AID and a Route Identifier (RID) of the ASN, and report the mapping relationship to the ILR of the user;
the ILR is configured to store the mapping relationship between the user's AID and the RID of the ASN; and after receiving a mapping relationship inquiry request initiated by other ASNs according to the user's AID, return the RID corresponding to the user's AID to the ASN initiating the inquiry request.

The above implementation scheme is based on the Subscriber Identifier and Locator Identifier Separation Network, and the accessing to the network over the public device by a user is implemented using uniqueness of a user's AID in the whole network. Compared with the traditional IP network at present, with the above implementation scheme, effective tracking and tracing can be performed on the user who accesses the network over the public device on the basis of the uniqueness of the AID in the whole network by making full use of the advantage of the Subscriber Identifier and Locator Identifier Separation Network.

### Brief Description of Drawings

FIG. 1 is a diagram of architecture of a SILSN according to an embodiment of the present invention.
FIG. 2 is a flowchart of a user accessing a network over a public device according to an embodiment of the present invention.
FIG. 3 is a flowchart of forwarding a message when a user surfs the Internet over a public device according to an embodiment of the present invention.
FIG. 4 is a flowchart of an ASN processing a message from a public device according to an embodiment of the present invention.
FIG. 5 is a flowchart of an ASN processing a message from other ASNs according to an embodiment of the present invention.
FIG. 6 is a flowchart of a user being offline according to an embodiment of the present invention.

### Preferred Embodiments of the Present Invention

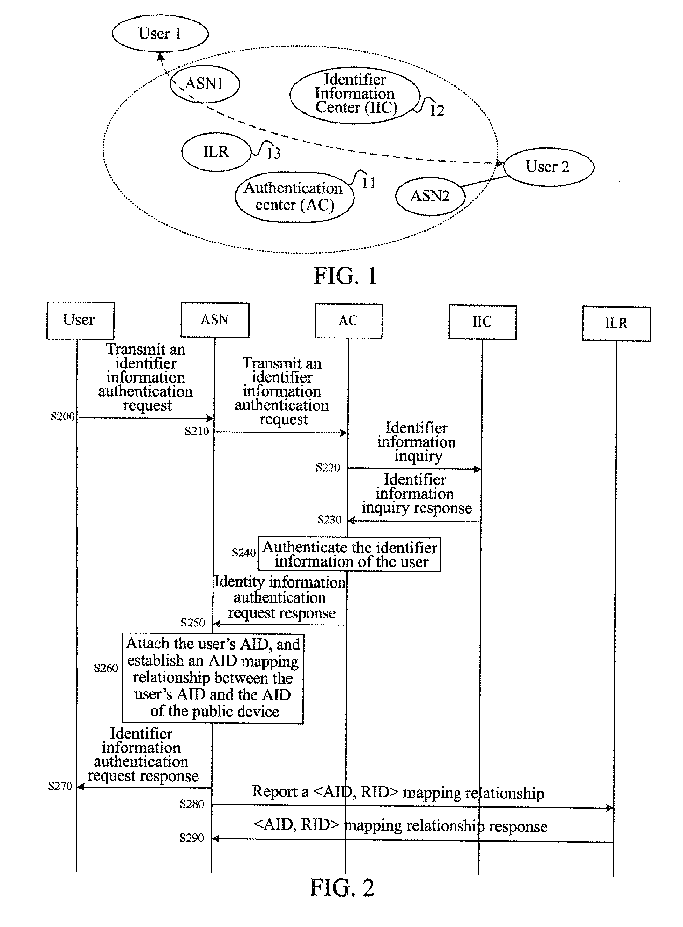

In order to solve the problem of the duality of Identity and location of the existing traditional IP addresses, the present invention presents a system architecture of a Subscriber Identifier and Locator Separation Network (SILSN for short) illustrated in FIG. 1. In FIG. 1, the SILSN system is comprised of an Access Service Node (ASN for short), users, an Authentication Center (AC for short) 11, an Identifier Information Center (IIC) 12 and an Identification and Location Register (ILR for short) 13 etc.

Wherein, the ASN is primarily responsible for the access of the user, and undertakes functions such as charging, switching etc.; the ILR is configured to undertake the function of location registration and the function of identifying the identity and location of the user, and the function of location inquiry; the AC is primarily responsible for the authentication of the access of the user; and the IIC is primarily responsible for storing the identifier information of the user.

There are two kinds of identifiers in the above SILSN architecture network, i.e., an Access Identifier (AID for short) and a Routing Identifier (RID for short). Wherein, the AID is a User's access identifier which is only allocated to the user for use and is unique in the whole network, and the access identifier can be unique and unchanged in the transmission in the network, and also the AID will not be changed when the user moves in the network, and is unique in the whole network. The RIDs of the respective attached ASNs are used between users to route communication messages. It should be illustrated that the access identifier and the location identifier can have different names in different SILSN architecture, but the substances thereof are the same.

The above SILSN network has the following features: each user can access only after strict authentication in the network, and the user carries his/her own AID in the data packets transmitted in various services at the same time, and each data packet transmitted by the user must pass the ASN authentication, to ensure the data packet transmitted by the user carries his/her own access identifier, and will not palm off other User's AID to access the network, and the access identifier will maintain the same when being transmitted in the network, and when the user moves or switches, the identifier will not be changed.

In the example of FIG. 1, users User1 and User2 have unique access identifier AID1 and AID2 respectively, and User1 and User2 access networks respectively passing through ASN1 and ASN2. Wherein, User2 normally accesses the network, i.e. using his/her own User Equipment (UE for short) to access the network, and the AID of the UE thereof is the AID used by User2 to be bound to the service. While User1 accesses the network over a public device. Due to the AID of the public device is not the AID owned by User1, the AID of the public device cannot be bound to the application services of the user.

For the above proposed SILSN network, in order to solve the problem, the basic implementation idea of the present invention is as follows: a user inputting identifier information over the public device and requesting accessing the network; the AC inquiring the identifier information of the user from the IIC, authenticating the network access request of the user, and if the authentication is successful, sending the user's AID to the public device where the user is located, and then using the user's AID as a virtual AID to bind the virtual AID to the public device.

Thus, the binding between the User's AID and the application services can be achieved: the public device using the User's AID as the AID of the local device, and the application programs on the device using the User's AID when processing events related to the network.

More specifically, the present invention uses the following scheme to solve the problem of accessing the network over the public device based on the SILSN network:
after receiving a network access request message transmitted by a user over a public device, an ASN transmitting the received network access request message to an AC, wherein, the network access request message comprises identifier information of the user;
the AC initiating an inquiry to an IIC according to the identifier information of the user, and authenticating legality of the user according to an inquiry result, and if the authentication is passed, transmitting the user's AID to the ASN;
the ASN sending the user's AID to the public device, and the public device using the user's AID as a virtual AID, and using the virtual AID to transmit/receive messages of the user.

Wherein, the identifier information comprises at least a number of an identification card or a passport number of the user.

In addition, the network access request message may further comprise authentication information which is set when the IIC samples the identifier information of the user, and the authentication information comprises a password, an authentication code, or fingerprint information of the user.

Further, after receiving the inquiry request initiated by the AC, the IIC returns the authentication information of the user to the AC as an inquiry result; and
the AC authenticates the legality of the user according to the inquiry result, and if the authentication information in the network access request message is in accordance with the inquiry result, determines that the user passes the authentication, otherwise, determines that the user does not pass the authentication.

In addition, after receiving the inquiry request initiated by the AC, the IIC may return a validity period of the identification card of the user to the AC as the inquiry result; and
the AC authenticates the legality of the user according to the validity period of the identification card, and if the identification card is within the validity period, the user passes the authentication, otherwise, the user does not pass the authentication.

Further, if the user passes the legality authentication, the ASN establishes a mapping table between the user's AID and the AID of the public device, and meanwhile sets an attribute of the user's AID as a virtual AID; and when receiving a message with the virtual AID being a source address or a destination address, the ASN inquires the mapping table to obtain the AID of the public device, and performs traffic statistic on the public device.

Further, the ASN will prohibit the public device from accessing a user except for the AC.

The implementation of the technical scheme of the present invention will be further described in detail in conjunction with accompanying drawings and specific embodiments. It should be illustrated that, the contents of the present invention can be explained by the following embodiments, but are not limited to the following embodiments.

FIG. 2 illustrates a flow of a user accessing a network over a public device using an identification card. The flow can specifically comprise the following steps.

In S200, the user inputs identifier information over the public device, then transmits a network access request message, wherein, the source AID in the message is the AID of the public device, and the destination is the AC;
the identifier information can be a number of the identification card and a password etc., for example, a user uses his/her own second generation identification card to read the identifier information over the public device, and inputs a password to apply for accessing the network.

In S210, the ASN receives the network access request message from the public device, and forwards the request message to the AC for processing.

In S220, the AC receives the network access request message of the user from the public device, extracts the identifier information (such as the number of the identification card of the user and the password) in the request information, and transmits an identifier information inquiry request of the user to the IIC according to the number of the identification card.

In S230, the IIC inquires detailed information, including a validity period of the identification card, AID, password, name, gender etc., of the user according to the number of the identification card provided by the AC, and then transmits an inquiry response message, including information such as the validity period of the identification card of the user, AID, password, name, gender etc., to the AC.

In S240, the ASN receives the identifier information inquiry response message of the user from the IIC, and authenticates whether the user can legally access the network according to the information such as the password etc. and the validity period of the identification card in the response message, and if the identifier information of the user is true and the identification card is within the validity period, the AC will accept the network access request of the user; and if the validity period of the identification card of the user expires or the information such as the password (or name and gender) is incorrect, the AC will refuse the user to access the network.

In S250, the AC transmits authentication response information to the public device.

In S260, after receiving the response information of authentication of the user accessing the network from the AC, if the authentication is passed, the ASN will attach the user's AID, establish a <AID, RID> mapping relationship between the user's AID and a RID of the ASN itself, and meanwhile establish an AID mapping table in a form of <AID, AID> for the user and the public device; alternatively, the ASN will set the attribute of the user's AID as the user's virtual AID; and if the authentication is not passed, the ASN will directly forward the network access authentication response message from the AC.

In S270, the public device receives a response message of the identifier information authentication request, and if the authentication is passed, the public device will use the user's AID as a virtual AID in its own system, and all network behaviors of the user occurring on the public device will use the virtual AID as a source AID.

For example, when the user accesses a File Transfer Protocol (FTP) server, the source AID in the transmitted access request message is the virtual AID.

In S280, the ASN reports the user's <AID, RID> mapping relationship to the ILR.

Wherein, the purpose of the ASN establishing the user's <AID, RID> mapping relationship and reporting the mapping relationship to the ILR is to illustrate that the User's AID is attached to the ASN, facilitate other users and ASNs to inquire the corresponding RID information from the ILR according to the user's AID, and thus transmit a message to the ASN according to the inquired RID information.

In S290, after recording or updating the user's <AID, RID> mapping relationship, the ILR returns and reports the mapping relationship response information to the ASN.

Thereafter, after receiving the mapping relationship inquiry request for the user from other users or ASNs, the ILR returns the RID corresponding to the user's AID to the inquiring party.

It should be illustrated that in the above steps, S280 and S290 can also be implemented before S270. The order of the implementation depends on the interior implementation method of the ASN.

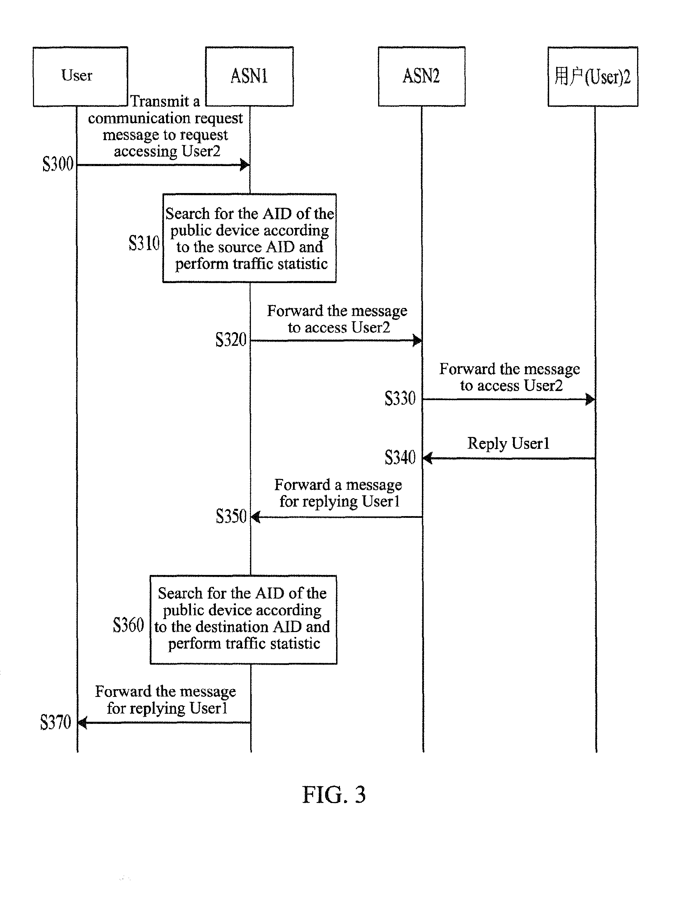

FIG. 3 illustrates a flow of forwarding a message when a user surfs the Internet over a public device. The behavior of the user surfing the Internet over the public device is basically the same as the user surfing the Internet over his/her own device, which complies with the requirements on the tracking and tracing of the user by the network manager and regulatory agencies, and meanwhile also solves the problem of binding between the User's AID of the network layer and the services of the application layer. The differences are in that the ASN needs to perform traffic statistic on the public device, to implement the management on the public device. The flow can specifically comprise the following steps.

In S300, User1 transmits a communication request message to User2 over the public device, wherein, a source AID in the message is an AID of User1, and the destination AID is an AID of User2.

Wherein, in addition to having its own AID, the system of the public device also allows the user who successfully accesses the network over the public device to attach his/her AID to the public device. That is, when the User's AID is attached to the public device, the AID which is used by the public device to transmit/receive the message is the User's virtual AID, instead of the AID of the public device itself. When the user exits the network, the virtual AID will also be deleted; thereafter, the AID which is used by the public device to transmit/receive the message is the AID of the public device itself.

In S310, after ASN1 receives a message from the public device and checks that the source AID is a virtual AID according to the attribute of the attached user's AID which is set by the ASN, the ASN1 inquires the mapping table between User1's AID and the AID of the public device using the AID to obtain the AID of the public device, and performs the traffic statistic on the public device.

In S320, ASN1 inquires the corresponding RID (a RID of ASN2) from the ILR according to the destination AID, i.e., User2's AID in User1's communication request message, and uses the RID of ASN1 as a source RID, and uses the RID of ASN2 as the destination RID to encapsulate the RIDs in the message, and route and forward the message to ASN2.

In S330, after receiving the above message, ASN2 releases the encapsulated RID and then forwards User1's communication request message to User2.

In S340, User2 replies User1's communication request, wherein, the source address in the replied message is User2's AID and the destination address is User1's AID.

In S350, after encapsulating the source RID (the RID of ASN2) and the destination RID (a RID of ASN1) in the replied message, ASN2 forwards the replied message to ASN1.

The present example is described by example of User1 initiating communication to User2, and if it is User2 that initiates communication to User1, ASN2 inquires ILR according to the destination address, i.e., User1's AID in User2's communication request message to obtain the corresponding RID of ASN1, then encapsulates the obtained corresponding RID in the message, and forwards and routes the message to ASN1. The communication flow is similar as that in the present example, and will not be described further here.

In S360, ASN1 receives the message from ASN2, checks that the destination AID is a virtual AID, then inquires the mapping table between User1's AID and the AID of the public device using the AID to obtain the AID of the public device, and performs traffic statistic on the public device.

In S370, after releasing the RID encapsulated in the message, ASN1 forwards User2's replied message to User1.

At this point, the flow of the user forwarding the message over the public device ends.

It should be illustrated that, ASN1 inquiring the AID of the public device using the mapping table between User1's AID and the AID of the public device and performing traffic statistic is only one of functions for the ASN. The function which can be owned by ASN1 according to the AID mapping table is not limited to the traffic statistic, and further comprises functions such as recording a specific position where User1 accesses the network, performing charging on the public device, etc.

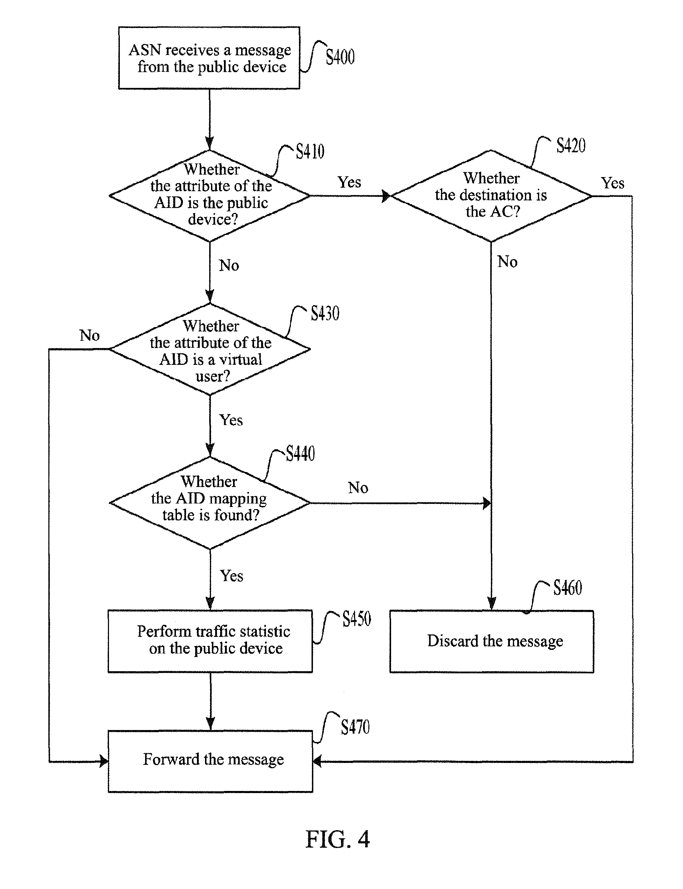

FIG. 4 illustrates a flow of an ASN processing a message from a public device. In the example, the ASN needs to check whether the original AID is the AID of the public device. If the AID is the AID of the public device, it needs to prohibit the public device from directly accessing a destination which is not the AC. The flow can specifically comprise the following steps.

In S400, the ASN receives a message from the public device.

In S410, the ASN extracts a source AID in the message, determines whether the source AID is the AID of the public device, and if the source AID is the AID of the public device, skip to step S420; otherwise, skip to step S430.

In this step, the ASN can search for the source AID according to a list of all AIDs thereon, and then determine whether the source AID is the public device by looking over the attribute of the source AID. There may be many types of attributes of the AID, for example, the above attribute of the public device, and the virtual AID, an AID needing to be redirected, and so on.

In addition, the AID can further determine whether the above source AID is the public device by many other modes, for example, the ASN can back up all the AIDs of the public device thereon, and separately store the AIDs as an AID list of the public device; and when receiving the message, determine whether the source AID is of the public device according to the backed up AID list of the public device etc. These will not be all listed here.

In S420, the ASN determines whether the destination of the message is the AC, and if the destination of the message is the AC, skip to step S470, and the message is normally forwarded; otherwise, skip to step S460, and the message is discarded.

In S430, if the AID is not the AID of the public device, the ASN determines whether the attribute of the AID is a virtual user, i.e., whether the attribute is the virtual AID for the user to access the network over the public network; and if the attribute is a virtual user, skip to step S440; otherwise, skip to step S470, and the message is normally forwarded.

In S440, whether there is an AID mapping table between the virtual AID and the corresponding AID of the public device is inquired according to the virtual AID for the user to access the network over the public device, and if there is an AID mapping table, skip to step S450; otherwise, skip to step S460, and the message is discarded.

In S450, the ASN performs traffic statistic on the public device according to the inquired AID mapping table, and skip to step S470.

In S460, the message is discarded; and the flow ends.

In S470, the message is normally forwarded. It should be illustrated that S470 is skipped from step S420, S430 or S450.

At this point, the flow of the ASN processing the message from the public device ends.

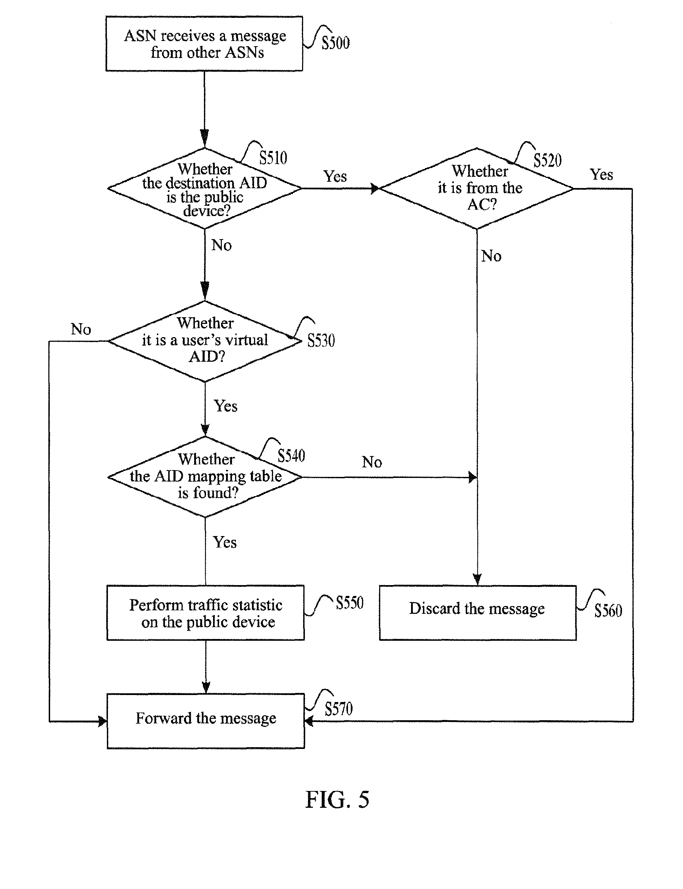

FIG. 5 illustrates a flow of an ASN processing a message from other ASNs. In the example, the ASN needs to determine whether the destination AID is a User's virtual AID for accessing the network over a public device. The flow can specifically comprise the following steps.

In S500, the ASN extracts a source AID and a destination AID of the message.

In S510, the ASN determines whether the destination AID is an AID of the public device; if the destination AID is the AID of the public device, skip to step S520; otherwise, skip to step S530.

In S520, the ASN determines whether the message is from an AC, and if the message is from an AC, skip to step S570, and the message is normally forwarded; otherwise, skip to step S560, and the message is discarded.

In step 530, the ASN determines whether the destination AID of the message is the User's virtual AID for accessing the network over the public device; and if the destination AID of the message is the User's virtual AID, skip to step S540; otherwise, skip to step S570, and the message is normally forwarded.

In S540, the destination AID of the message is the User's virtual AID for accessing the network over the public device, and the ASN inquires whether there is an AID mapping table between the destination AID and an AID of the public device according to the destination AID; and if there is the AID mapping table, skip to step S550; otherwise, skip to step S560, and the message is discarded.

In S550, the ASN performs traffic statistic on the public device according to the AID of the public device; and skip to step S570.

In S560, the ASN discards the message; and the flow ends.

In S570, the ASN normally forwards the message, and it should be illustrated that the step is skipped from steps S520, S530 and S550.

At this point, the flow of the ASN processing the message from the other ASNs ends.

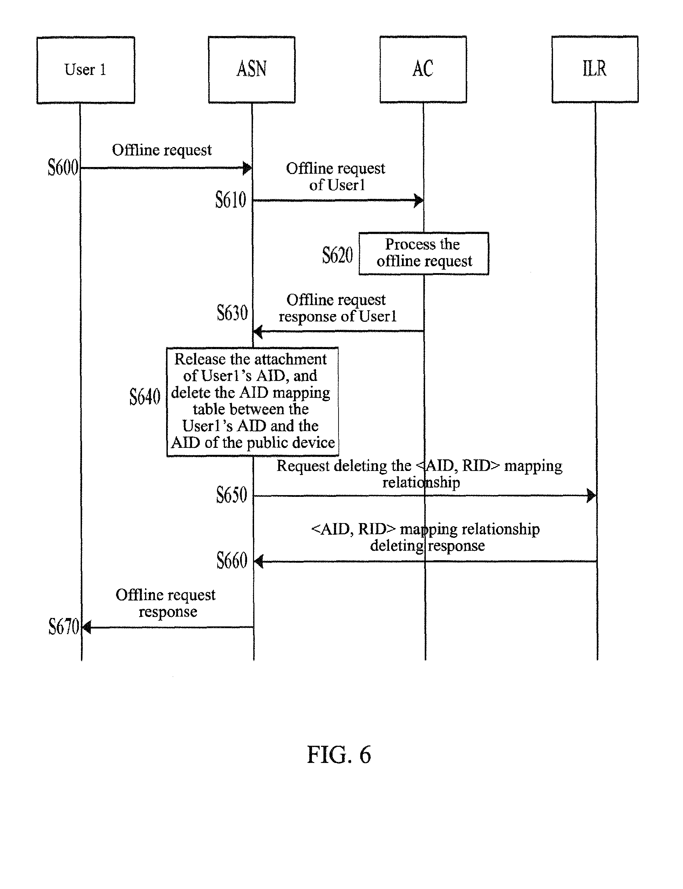

FIG. 6 is a flow of a user being off line. The user has accessed the network over a public device, and when the user needs to be offline after being in an online state, the user transmits an offline request, and all the AC, ILR and ASN need to delete records related to the User's AID. The flow specifically comprises the following steps.

In S600, User1 who accesses the network over the public device transmits an offline request to the AC through the ASN.

In S610, the ASN receives the offline request of User1, and forwards the received offline request to the AC for processing.

In S620, the AC receives the offline request of User1, deletes an online state of User1 in the network.

In S630, the AC transmits an offline request response to the ASN to notify the ASN to delete information related to User1.

In S640, the ASN receives an offline request response message from the AC, releases the attachment of User1's AID, and meanwhile deletes an AID mapping table between User1's AID and the AID of the public device.

In S650, the ASN reports an update of User1's <AID, RID> mapping relationship to the ILR, to request to delete User1's <AID, RID> mapping relationship.

In S660, the ILR deletes User1's <AID, RID> mapping relationship, and transmits a mapping relationship deleting response to the ASN.

In S670, the ASN transmits an offline success response message to the public device, and deletes User1's virtual AID attached to the public device.

At this point, the flow of the user being offline ends.

In addition, the present invention further provides a system of accessing a network over a public device (not shown), applied to a Subscriber Identifier and Locator Separation Network, comprising: an Access Service Node (ASN), a public device, an Authentication Center (AC) and an Identity Information Center (IIC), wherein,
the ASN is configured to, after receiving a network access request message comprising identifier information of a user transmitted by the user over a public device, transmit the received network access request message to the AC, and after receiving the user's AID, send the received AID to the public device;
the AC is configured to, after receiving the network access request message, initiate an inquiry to the IIC according to the identifier information of the user in the network access request message, and authenticate legality of the user according to an inquiry result, and if the authentication is passed, transmit the user's Access Identifier (AID) to the ASN;
the public device is configured to after receiving the user's AID sent by the ASN, use the user's AID as a virtual AID, and use the virtual AID to transmit/receive messages of the user.

Further, the IIC is configured to after receiving the inquiry request initiated by the AC, return a validity period of the identification card of the user to the AC as an inquiry result;
the AC is configured to authenticate legality of the user according to the validity period of the identification card, and if the identification card is within the validity period, determine that the user passes the authentication, and if the identification card is not within the validity period, determine that the user does not pass the authentication.

Further, the network access request message further comprises authentication information,
the IIC is further configured to set the authentication information of the user while sampling the identifier information of the user; and after receiving the inquiry request of the user initiated by the AC, return the authentication information of the user to the AC as an inquiry result;
the AC is further configured to authenticate the legality of the user according to the inquiry result, and if the authentication information in the network access request message is in accordance with the inquiry result, determine that the user passes the authentication, and if the authentication information in the network access request message is not in accordance with the inquiry result, the user does not pass the authentication.

Further, the system further comprises an Identification and Location Register (ILR),
the ASN is further configured to attach the received user's AID which is transmitted by the AC, establish a mapping relationship between the user's AID and a Route Identifier (RID) of the ASN, and report the mapping relationship to the ILR of the user;
the ILR is configured to store the mapping relationship between the user's AID and the RID of the ASN; and after receiving a mapping relationship inquiry request initiated by other ASNs according to the user's AID, return the RID corresponding to the user's AID to the ASN initiating the inquiry request.

A person having ordinary skill in the art can understand that all or a part of steps in the above method can be implemented by programs instructing related hardware, and the programs can be stored in a computer readable storage medium, such as a read-only memory, disk or CD-ROM etc. Alternatively, all or a part of steps in the above embodiments can also be implemented by one or more integrated circuits. Accordingly, each module/unit in the above embodiments can be implemented in a form of hardware, or can also be implemented in a form of software functional module. The present invention is not limited to any particular form of a combination of hardware and software.

The above description is only the preferred embodiments of the present invention and is not intended to limit the present invention. The invention can have a variety of changes and variations for those skilled in the art. Any modification, equivalent substitution, improvement etc. which are made within the spirit and principle of the present invention should belong to the protection scope of the present invention.

### Industrial Applicability

The method and system for accessing the network over the public device which are provided by the present invention implement accessing the network on the public device by a user using uniqueness of a user's AID in the whole network, and with the above implementation scheme, effective tracking and tracing can be performed on the user who accesses the network over the public device on the basis of the uniqueness of the AID in the whole network by making full use of the advantage of the Subscriber Identifier and Locator Identifier Separation Network.

## Claims

1. A method of accessing a network over a public device, applied to a Subscriber Identifier and Locator Separation Network, comprising:
after receiving a network access request message transmitted by a user over a public device, an Access Service Node (ASN) transmitting the received network access request message to an Authentication Center (AC), wherein, the network access request message comprises identifier information of the user;
the AC initiating an inquiry to an Identity Information Center (IIC) according to the identifier information of the user, and authenticating legality of the user according to an inquiry result, and if the authentication is passed, transmitting the user's Access Identifier (AID) to the ASN; and
after receiving the user's AID, the ASN sending the received AID to the public device, and the public device using the user's AID as a virtual AID, and using the virtual AID to transmit/receive messages of the user.

2. The method according to claim 1, wherein,
the identifier information comprises at least a number of identification card or passport number of the user.

3. The method according to claim 2, wherein,
the network access request message further comprises authentication information which is set when the IIC samples the identifier information of the user, and the authentication information comprises a password, an authentication code, or fingerprint information of the user.

4. The method according to claim 3, further comprising:
after receiving the inquiry request initiated by the AC, the IIC returning the authentication information of the user to the AC as an inquiry result; and
the AC authenticating the legality of the user according to the inquiry result, and if the authentication information in the network access request message is in accordance with the inquiry result, determining that the user passes the authentication, and if the authentication information in the network access request message is not in accordance with the inquiry result, determining that the user does not pass the authentication.

5. The method according to claim 1, 2 or 4, wherein, in the step of the AC initiating an inquiry to an Identity Information Center (IIC) according to the identifier information of the user, and authenticating the legality of the user according to an inquiry result, and if the authentication passes, transmitting the user's Access Identifier (AID) to the ASN,
after receiving the inquiry request initiated by the AC, the IIC returns a validity period of the identification card of the user to the AC as the inquiry result; and
the AC authenticates the legality of the user according to the validity period of the identification card, and if the identification card is within the validity period, the user passes the authentication, and if the identification card is not within the validity period, the user does not pass the authentication.

6. The method according to any of claims 1-4, further comprising:
after receiving the user's AID, the ASN attaching the user's AID, establishing a mapping relationship between the user's AID and a Route Identifier (RID) of the ASN, and reporting the mapping relationship to an Identification and Location Register (ILR) of the user.

7. The method according to claim 6, further comprising:
after receiving the user's AID, the ASN establishing a mapping table between the user's AID and the AID of the public device, and setting an attribute of the user's AID as a virtual AID; and
when receiving a message with the virtual AID being a source address or a destination address, the ASN inquiring the mapping table to obtain the AID of the public device, and performing traffic statistic or charging on the public device.

8. The method according to any of claims 1-4, further comprising:
the ASN prohibiting the managed public device from accessing a user or a device except for the AC.

9. A system of accessing a network over a public device, applied to a Subscriber Identifier and Locator Separation Network, comprising: an Access Service Node (ASN), a public device, an Authentication Center (AC) and an Identity Information Center (IIC), wherein,
the ASN is configured to, after receiving a network access request message comprising identifier information of a user transmitted by the user over a public device, transmit the received network access request message to the AC, and after receiving the user's AID, send the received AID to the public device;
the AC is configured to, after receiving the network access request message, initiate an inquiry to the IIC according to the identifier information of the user in the network access request message, and authenticate legality of the user according to an inquiry result, and if the authentication is passed, transmit the user's Access Identifier (AID) to the ASN;
the public device is configured to after receiving the user's AID sent by the ASN, use the user's AID as a virtual AID, and use the virtual AID to transmit/receive messages of the user.

10. The system according to claim 9, wherein,
the IIC is configured to after receiving the inquiry request initiated by the AC, return a validity period of the identification card of the user to the AC as an inquiry result;
the AC is configured to authenticate legality of the user according to the validity period of the identification card, and if the identification card is within the validity period, determine that the user passes the authentication, and if the identification card is not within the validity period, determine that the user does not pass the authentication.

11. The system according to claim 10, wherein, the network access request message further comprises authentication information,
the IIC is further configured to set the authentication information of the user while sampling the identifier information of the user; and after receiving the inquiry request of the user initiated by the AC, return the authentication information of the user to the AC as an inquiry result;
the AC is further configured to authenticate the legality of the user according to the inquiry result, and if the authentication information in the network access request message is in accordance with the inquiry result, determine that the user passes the authentication, and if the authentication information in the network access request message is not in accordance with the inquiry result, the user does not pass the authentication.

12. The system according to claim 9, the system further comprises an Identification and Location Register (ILR),
the ASN is further configured to attach the received user's AID which is transmitted by the AC, establish a mapping relationship between the user's AID and a Route Identifier (RID) of the ASN, and report the mapping relationship to the ILR of the user;
the ILR is configured to store the mapping relationship between the user's AID and the RID of the ASN; and after receiving a mapping relationship inquiry request initiated by other ASNs according to the user's AID, return the RID corresponding to the user's AID to the ASN initiating the inquiry request.
